# EUROPÄISCHE PATENTSCHRIFT

(11) **EP 0 954 078 B1**
(45) Veröffentlichungstag und Bekanntmachung des Hinweises auf die Patenterteilung: **17.03.2004**
(21) Anmeldenummer: 99107332.1
(22) Anmeldetag: 20.04.1999
(51) Int. Cl.: H02G 3/32, F16L 3/10, F16L 3/12

(54) **Halteeinrichtung für wenigstens ein Kabel oder eine Leitung**
Support for at least one cable or one conduit
Support pour au moins un câble ou un conduit

(30) Priorität: 30.04.1998 DE 19819430; 18.01.1999 DE 19901778
(43) Veröffentlichungstag der Anmeldung: 03.11.1999
(73) Patentinhaber: Kabelschlepp GmbH, 57074 Siegen (DE)
(72) Erfinder: Wehler, Herbert, 57290 Neunkirchen (DE); Weber, Willibald, 57250 Netphen (DE)
(74) Vertreter: Kahlhöfer, Hermann, Dipl.-Phys.

(56) Entgegenhaltungen:
- WO-A-93/17469
- DE-A- 4 130 603
- DE-A- 19 636 515
- DE-C- 4 123 430

## Beschreibung

Der Gegenstand der Erfindung bezieht sich auf eine Energieführungskette mit einer Halteeinrichtung für wenigstens ein Kabel oder eine Leitung mit einem Haltekörper, der ein erstes und ein zweites Halteteil aufweist, wobei die Halteteile einen Kanal begrenzen, und mit wenigstens einem die Halteteile lösbar verbindenden Verbindungselement.

Eine solche Halteeinrichtung ist beispielsweise durch die DE 94 14 666 U1 bekannt.

Die DE 44 13 303 C1 beschreibt eine weitere Ausführungsform einer Halteeinrichtung für wenigstens Kabel oder Leitungen. Diese Halteeinrichtung umfaßt einen U-förmig ausgebildeten Grundkörper Die freien Schenkel des Grundkörpers sind mit einem Halteteil verbindbar. Innerhalb des U-förmigen Grundkörpers ist ein Halteteil angeordnet, welches über eine Schraube gegen eine Leitung gedrückt werden kann. Die Leitung wird zwischen den Halteteilen geklemmt. Bei einer solchen Ausgestaltung einer Halteeinrichtung besteht die Gefahr, daß durch die Schraube eine zu große Kraft auf die Leitung übertragen wird, so daß diese gequetscht wird. Andererseits wenn die Kraft, die durch die Schraube in die Leitung eingebracht wird, zu gering ist, besteht die Gefahr, daß eine zuverlässige Halterung, insbesondere Zugentlastung, der Leitung nicht gewährleistet werden kann. Die Klemmkraft, die über die Schraube in die Leitung eingeleitet wird, ist abhängig von dem Bedienpersonal, welches die Schraube anzieht.

Durch die DE 37 31 149 C2 ist eine weitere Ausführungsform einer Halteeinrichtung für ein Kabel bekannt. Die Halteeinrichtung dient zur Zugentlastung für ein Kabel. Das Kabel weist ein radial überstehendes Anschlußteil auf, daß von einem in eine Öffnung eines Gerätes einführbaren, aus zwei Halbschalen bestehenden und innerhalb der Öffnung fixierbaren Adapter formschlüssig umgriffen wird. Jede der Halbschalen weist eine senkrecht zu ihrer axialen Richtung verlaufende Rille zur Aufnahme eines als U-förmige Klammer ausgestalteten Sicherungselementes auf Das Sicherungselement weist in den Endbereichen seiner federnden Schenkel zueinander weisende Rastnasen auf Die Anschlußschnur wird im eingebrachten Zustand innerhalb der Öffnung durch die Halbschalen gehalten. Die Ausbildung einer solchen Zugentlastung setzt voraus, daß das Kabel ein speziell ausgebildetes Anschlußteil aufweist, welches in eine Ausnehmung, die von den Halbschalen gebildet ist, einbringbar ist. Die Ausbildung eines solchen Anschlußteils ist jedoch nicht bei jedem Kabel möglich.

Hiervon ausgehend liegt der vorliegenden Erfindung die Zielsetzung zugrunde eine Energieführungskette mit einer Halteeinrichtung für wenigstens ein Kabel oder eine Leitung anzugeben, bei der sichergestellt ist, daß einerseits eine ausreichend hohe Kraft in die Leitung eingeleitet wird, so daß eine hinreichende Halterung, insbesondere Zugentlastung, der Leitung gewährleistet wird, und andererseits die Kraft nicht so hoch ist, daß ein Zerquetschen der Leitung erfolgt.

Diese Aufgabe wird durch eine erfindungsgemäße Energieführungskette mit den Merkmalen des Anspruchs 1 gelöst. Vorteilhafte Weiterbildungen und Ausgestaltungen sind Gegenstand der Unteransprüche.

Die erfindungsgemäße Energieführungskette mit einer Halteeinrichtung für wenigstens ein Kabel oder eine Leitung weist einen Haltekörper auf, der durch ein erstes und ein zweites Halteteil gebildet ist. Die Halteteile begrenzen einen Kanal, der zur Aufnahme einer Leitung oder eines Kabels dient. Die Halteeinrichtung weist ferner ein Verbindungselement auf, daß das erste und das zweite Halteteil teilweise umgreift. Das Verbindungselement übt auf das erste und auf das zweite Halteteil eine Kraft aus, durch die eine im Kanal verlegte Leitung oder ein Kabel zwischen den Halteteilen und durch diese geklemmt wird. Die Halteteile der Halteeinrichtung werden durch das wenigstens eine Verbindungselement so gegen die sich zwischen Halteteilen befindende Leitung gepreßt, daß eine im wesentlichen kraftschlüssige Verbindung zwischen der Leitung bzw. dem Kabel und der Halteeinrichtung entsteht. Diese Ausführungsform der Halteeinrichtung setzt nicht voraus, daß das Kabel bzw. die Leitung speziell ausgebildete Anschlußteile aufweist. In Abkehr von den bisher bekannten Halteeinrichtungen wird die Kraft, die zum Klemmen des Kabels bzw. der Leitung notwendig ist, nicht mehr über eine Schraube oder dergleichen erzeugt, sondern durch das Verbindungselement selbst.

Die erfindungsgemäße Energieführungskette mit einer Halteeinrichtung für wenigstens ein Kabel oder eine Leitung kann beispielsweise dazu verwendet werden, Kabel oder Leitungen in einem Schaltschrank zu halten. Die Halteeinrichtung ist auch dazu geeignet, zugentlastend zu wirken, da durch die Halteteile eine ausreichende Haltekraft auf die Leitungen übertragen werden kann. Zugentlastende Befestigung von Leitungen ist insbesondere bei Energieführungsketten von Bedeutung. Auf für solche Energieführungsketten ist die erfindungsgemäße Halteeinrichtung besonders geeignet.

Vorzugsweise ist das Verbindungselement wenigstens teilweise federnd ausgebildet, so daß das Verbindungselement eine vorbestimmte Kraft auf die Halteteile ausübt. Das Verbindungselement übt dabei eine radial einwärts gerichtete Kraft aus, die im wesentlichen von der Federsteifigkeit des Verbindungselementes abhängig ist.

Nach einer vorteilhaften Ausbildung der Zugentlastungseinrichtung wird vorgeschlagen, daß das Verbindungselement im wesentlichen C-förmig ausgebildet ist. Durch diese Ausbildung des Verbindungselementes wird eine relativ einfache Montage des Verbindungselementes am Haltekörper erreicht. Vorzugsweise ist das Verbindungselement als eine Feder ausgebildet.

Um sicherzustellen, daß das federelastische Verbindungselement nicht unbeabsichtigt von dem Haltekörper gelöst wird, wenn beispielsweise Vibrationen auftreten, wird vorgeschlagen, daß das Verbindungselement den Kanal über einen Winkel von mehr als 180° umgibt. Durch diese Ausgestaltung des Verbindungselementes ist es zum Lösen der Verbindung notwendig, daß das Verbindungselement aufgespreizt wird.

Gemäß einer weiteren vorteilhaften Ausgestaltung der erfindungsgemäßen Energieführungskette mit einer Halteeinrichtung wird vorgeschlagen, daß das Verbindungselement Endbereiche aufweist, die in sich in Längsrichtung des Halteteils erstreckende Rillen hineinragen. Hierdurch wird eine formschlüssige Verbindung zwischen dem Verbindungselement und dem Haltekörper erreicht. Durch diese Ausgestaltung der Halteeinrichtung wird auch ein relativ kompakter Aufbau der Halteeinrichtung erzielt.

Nach einer noch weiteren vorteilhaften Ausgestaltung der Energieführungskette mit einer Halteeinrichtung wird vorgeschlagen, daß die Endbereiche des Verbindungselementes einander zugewandte Vorsprünge aufweisen und die Rillen einen an den Querschnitt der Vorsprünge angepaßte Innenkontur haben.

Das Verbindungselement ist vorzugsweise im Querschnitt als ein C-förmiges Profil ausgebildet. Die freien Schenkel des Profils des Verbindungselementes greifen in an den Halteteilen ausgebildete Rillen hinein. Der in das C-förmige Profil eingreifende Abschnitt der Halteteile ist korrespondierend zum Querschnitt des Verbindungselementes ausgebildet. Vorzugsweise verringert sich der Abstand der einander zugewandten Schenkel des C-förmigen Profils des Verbindungselemntes, so daß das Verbindungselement auf dem durch die Halteteile gebildeten Haltekörper geklemmt werden kann.

Zur Festlegung der Halteeinrichtung an oder auf einer Anlagefläche wird vorgeschlagen, daß das erste Halteteil an seinen freien Enden jeweils ein Anschlußelement aufweist. Das Anschlußelement kann beispielsweise eine Durchgangsbohrung haben, durch die ein Verbindungsmittel durchführbar ist, so daß das Verbindungsmittel das Anschlußelement an oder auf der Anlagefläche festlegt.

Nach einer weiteren vorteilhaften Ausgestaltung der Energieführungskettemit einer Halteeinrichtung wird vorgeschlagen, daß wenigstens ein Halteteil wenigstens ein Anschlußteil aufweist, welches durch wenigstens zwei im wesentlichen quer zur Längserstreckung des Halteteils verlaufende, beabstandete Laschen gebildet ist, die an ihren freien Enden hakenförmig ausgebildet sind. Durch diese Ausgestaltung des Anschlußteils wird die Möglichkeit eröffnet, die Halteeinrichtung an geeigneten Befestigungsmitteln einzuclipsen, wobei vorzugsweise die Laschen federelastisch sind. Es können auch mehrere Anschlußteile, welche gleichartig sein können, vorgesehen werden.

Zweckmäßigerweise ist die Energieführungskette mit einer Halteeinrichtung so ausgebildet, daß das zweite Halteteil zwischen den Anschlußteilen angeordnet ist, wobei die Längserstreckung des zweiten Halteteils im wesentlichen einem Abstand der Anschlußteile in Längsrichtung des zweiten Halteteils entspricht. Die Anschlußteile dienen hierbei als Anschläge für das zweite Halteteil, so daß eine axiale Verschiebung des zweiten Halteteils nicht oder nur in einem sehr begrenzten Umfang stattfinden kann.

Die Energieführungskette mit einer Halteeinrichtung kann aus einem Kunststoff hergestellt sein. Diese kann nach dem Kunststoffspritzverfahren hergestellt werden. Insbesondere, wenn die Halteeinrichtung aus einem Kunststoff besteht, ist es vorteilhaft, wenn die Halteteile gelenkig miteinander verbunden sind, so daß sie einstückig ausgebildet ist. Die gelenkige Verbindung der Halteteile kann mittels wenigstens eines Filmscharniers erfolgen.

Bei der erfindungsgemäßen Energieführungskette mit einer Halteeinrichtung kann eine relativ großflächige Anlage der Halteteile an eine Leitung erreicht werden, da die Halteteile in ihrer axialen Erstreckung im wesentlichen frei wählbar sind. Besteht wenigstens ein Teil der Wandung des Kanals aus einem elektrisch leitenden Werkstoff und ist die Wandung elektrisch mit einem Massepotential verbindbar, so eignet sich die erfindungsgemäße Halteeinrichtung besonders als elektrischer Schirmanschluß. Durch die elektrisch leitend ausgebildete Wandung wird ein niederohmiger und gut leitender Anschluß der Halteeinrichtung an einem Kabelschirm erreicht. Die Halteeinrichtung erfüllt so nicht nur die Funktion einer Zugentlastung sondern auch die Funktion eines Schirmanschlußes. Die Halteteile können auch vollständig aus einem Metall bestehen. Hierbei können die Halteteile beispielsweise aus einem Blech entsprechend gebogen sein. Die Halteteile können auch als Gußteile ausgebildet sein.

Weitere Einzelheiten und Vorteile der erfindungsgemäßen Energieführungskette mit einer Halteeinrichtung werden anhand der in der Zeichnung dargestellten Ausführungsbeispiele erläutert. Es zeigen:
- Fig. 1: Ein erstes Ausführungsbeispiel einer Energieführungskette mit einer Halteeinrichtung in einer Vorderansicht,
- Fig. 2: die Energieführungskette mit einer Halteeinrichtung nach Figur 1 in einer Seitenansicht von rechts,
- Fig. 3: ein erstes Halteteil der Energieführungskette mit einer Halteeinrichtung nach Figur 1 in einer Vorderansicht,
- Fig. 4: das erste Halteteil nach Figur 3 im Schnitt entlang der Schnittlinie E-E,
- Fig. 5: das erste Halteteil im Schnitt entlang der Schnittlinie G-G nach Figur 3,
- Fig. 6: ein Schnitt entlang der Schnittlinie F-F des ersten Halteteils nach Figur 3,
- Fig. 7: eine Seitenansicht von rechts des ersten Halteteils nach Figur 3,
- Fig. 8: das zweite Halteteil der Energieführungskette mit einer Halteeinrichtung nach Figur 1 in einer Draufsicht und im Teilschnitt,
- Fig. 9: das zweite Halteteil nach Figur 8 in einer Schnittdarstellung entlang der Schnittlinie H-H,
- Fig. 10: eine Seitenansicht des zweiten Halteteils nach Figur 8,
- Fig. 11: ein Verbindungselement,
- Fig. 12: das erste Halteteil und das zweite Halteteil in einer Seitenansicht und im Schnitt,
- Fig. 13 und 14: die Energieführungskette mit einer Halteeinrichtung nach Figur 1 mit Kabeln unterschiedlichen Durchmessers,
- Fig. 15: einen Haltekörper einer Energieführungskette mit einer Halteeinrichtung in einer Vorderansicht,
- Fig. 16: eine Seitenansicht von rechts des Haltekörpers nach Figur 15,
- Fig. 17: eine Schnittdarstellung des Haltekörpers nach Figur 15 entlang der Schnittlinie A-A,
- Fig. 18: eine Schnittdarstellung des Haltekörpers entlang der Schnittlinie B-B nach Figur 15,
- Fig. 19: eine Schnittdarstellung entlang der Schnittlinie C-C nach Figur 15,
- Fig. 20: eine Schnittdarstellung des Haltekörpers nach Figur 15 entlang der Schnittlinie D-D,
- Fig. 21: ein zweites Ausführungsbeispiel einer Energieführungskette mit einer Halteeinrichtung in einer Schnittdarstellung mit einem Haltekörper nach Figur 15,
- Fig.22: ein drittes Ausführungsbeispiel einer Energieführungskette mit einer Halteeinrichtung in einer Vorderansicht,
- Fig. 23: die Energieführungskettemit einer Halteeinrichtung nach Figur 22 in einer Seitenansicht von rechts,
- Fig. 24: ein Verbindungselement der Energieführungskette mit einer Halteeinrichtung nach Figur 22 in einer Vorderansicht,
- Fig. 25: das Verbindungselement nach Figur 24 in einer Seitenansicht von unten, und
- Fig. 26 bis 29: ein viertes Ausführungsbeispiel einer Energieführungskette mit einer Halteeinrichtung und Befestigungsvariationen dieser Energieführungskette mit einer Halteeinrichtung.

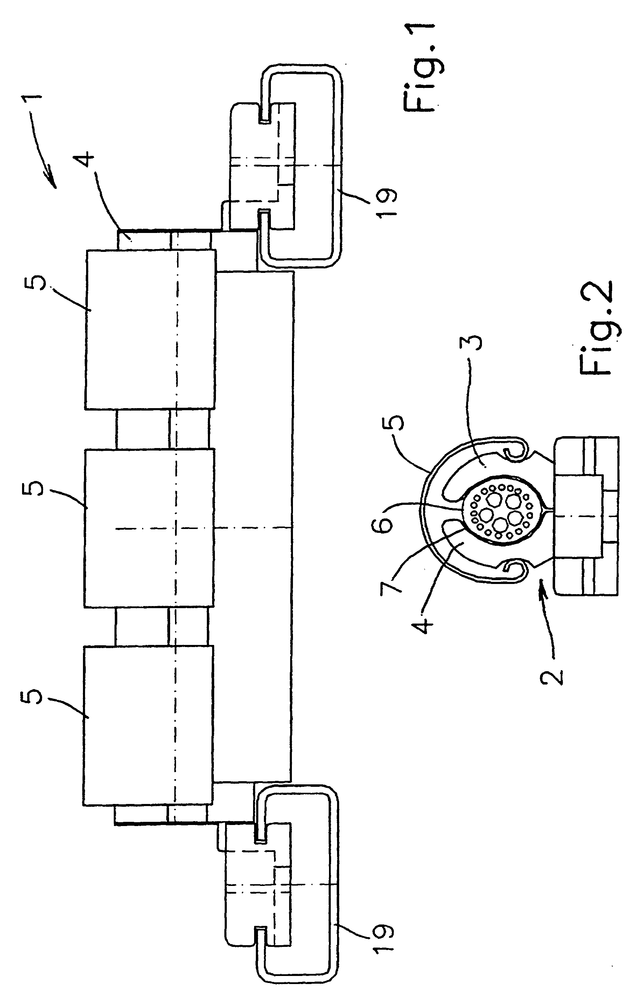

Figur 1 und 2 zeigen ein erstes Ausführungsbeispiel einer Energieführungskettemit einer Halteeinrichtung 1 für Kabel oder eine Leitung. Die Halteeinrichtung 1 weist einen Haltekörper 2 auf Der Haltekörper 2 ist durch ein erstes Halteteil 3 und ein zweites Halteteil 4 gebildet. Die Halteteile 3, 4 begrenzen einen Kanal 7. In dem Kanal 7 ist eine Leitung oder ein Kabel verlegbar.

Ein Verbindungselement 5 umgreift teilweise das erste Halteteil 3 sowie das zweite Halteteil 4. Das Verbindungselement 5 übt auf das erste und das zweite Halteteil 3, 4 eine radial einwärts gerichtete Kraft aus, durch die eine im Kanal 7 verlegte Leitung 6 zwischen und durch die Halteteile 3, 4 geklemmt wird.

In dem dargestellten Ausführungsbeispiel erstreckt sich der Haltekörper 2 im wesentlichen in Längsrichtung der Leitung 6. Wie aus der Figur 1 ersichtlich ist sind drei Verbindungselemente 5 vorgesehen, die die Halteteile 3, 4 umgreifen. Die Anzahl der Verbindungselemente ist im wesentlichen bestimmt durch die aufzubringende Klemmkraft.

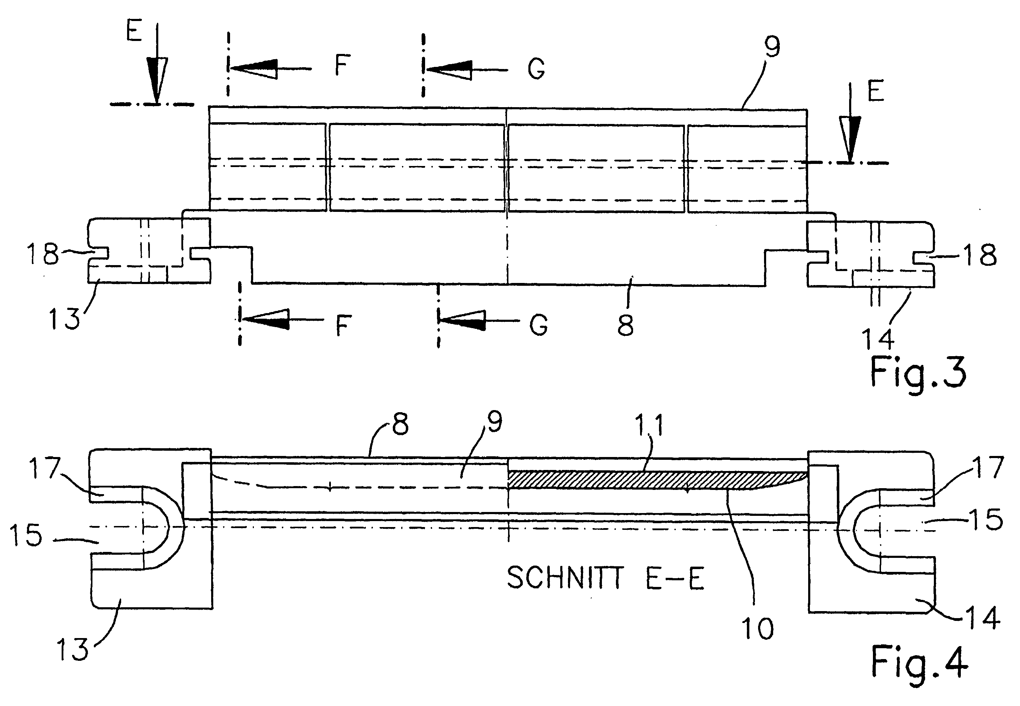

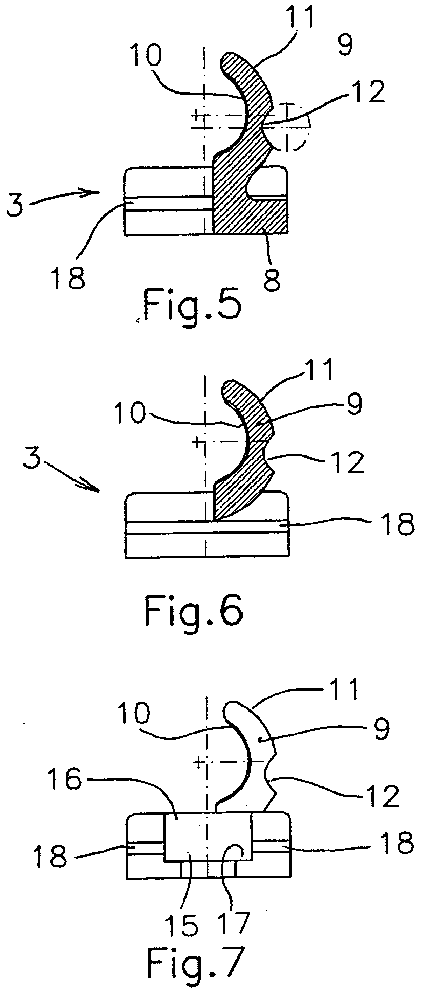

Figuren 3 bis 7 zeigen die Ausgestaltung des ersten Halteteils 3. Das Halteteil 3 weist einen Grundkörper 8 auf, an dem eine Halteschale 9 ausgebildet ist. Die Halteschale 9 weist eine Wandung 10 auf, die konkav gekrümmt ist. Die Krümmung der Wandung 10 entspricht vorzugsweise einer Kreiskrümmung.

Die Halteschale 9 weist eine Außenwand 11 auf In der Außenwand 11 ist eine sich in Längsrichtung des ersten Halteteils 3 erstreckende Rille 12 ausgebildet. Die Rille 12 ist im Querschnitt bogenförmig ausgebildet.

An jedem Endbereich des Grundkörpers 8 ist jeweils ein Anschlußteil 13 bzw. 14 ausgebildet. Jedes Anschlußteil 13, 14 weist eine im wesentlichen U-förmige Ausnehmung 15 auf. Die Ausnehmung 15 ist so ausgebildet, daß ein Verbindungsmittel, welches nicht dargestellt ist, in die Ausnehmung 15 einbringbar ist und das erste Halteteil 3 an einer Auflagefläche festlegt. Die Ausnehmung 15 ist so ausgebildet, daß diese eine Kopfaufnahme 16 aufweist, in die ein Schraubenkopf einbringbar ist. Der Rand des Kopfes der Schraube, welche nicht dargestellt ist, liegt auf der Auflagefläche 17 auf

Jedes Anschlußteil 13, 14 weist ferner Schlitze 18 auf, in die der Rand eines Profils 19 einbringbar ist, wie dies aus der Figur 1 ersichtlich ist. Die Profile 19 dienen zur örtlichen Festlegung des ersten Halteteils 3.

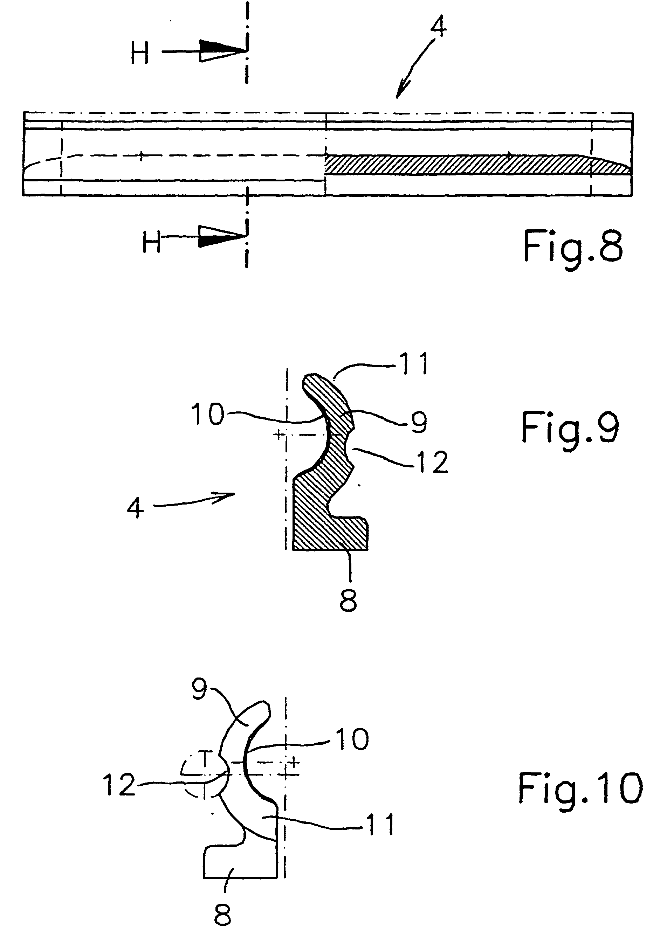

In den Figuren 8 bis 10 ist das zweite Halteteil 4 dargestellt. Der prinzipielle Aufbau des zweiten Halteteils 4 entspricht im wesentlichen dem Aufbau des ersten Halteteils 3. Der wesentliche Unterschied zwischen dem ersten Halteteil 3 und dem zweiten Halteteil 4, wie es in den Figuren 8 bis 10 dargestellt ist, ist, daß das zweite Halteteil 4 keine Anschlußteile 13, 14 aufweist. Das zweite Halteteil 4 weist ebenso wie das erste Halteteil 3 einen Grundkörper 8 auf, an dem sich eine Halteschale 9 anschließt. Die Halteschale 9 weist an ihrer Außenwand 11 eine Rille 12 auf, die sich in Längsrichtung des Halteteils 4 erstreckt.

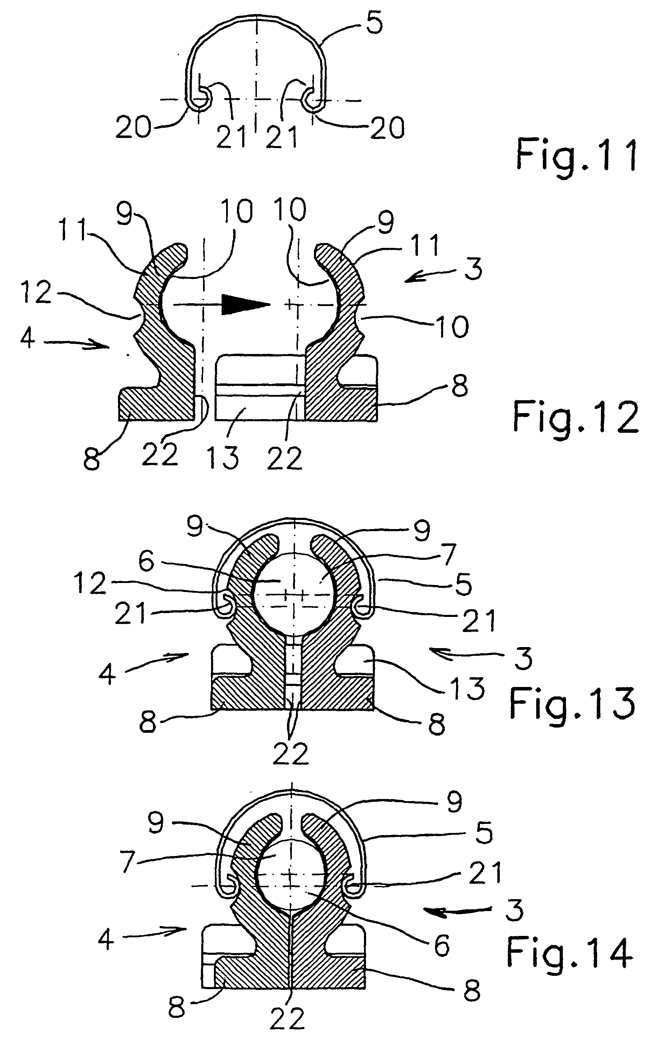

Die Längserstreckung des Halteteils 4 entspricht im wesentlichen dem Abstand zwischen den Anschlußteilen 13, 14 des ersten Halteteils 3. Das zweite Halteteil 4 ist zwischen die Anschlußteile 13, 14 des ersten Halteteils 3 einbringbar, wie dies aus der Figur 12 ersichtlich ist.

Die Halteschale 9 des ersten Halteteils 3 und des zweiten Halteteils 4 begrenzen einen im Querschnitt im wesentlichen kreisförmigen Kanal 7, in dem eine Leitung 6 anordenbar ist, wie dies beispielsweise aus der Figur 13 bzw. Figur 14 ersichtlich ist. Die Halteteile 3, 4 werden durch das Verbindungselement 5 miteinander verbunden. Das Verbindungselement 5 ist als eine Feder ausgebildet. Das Verbindungselement 5 ist im wesentlichen U-förmig ausgebildet. Wie insbesondere aus der Figur 13 ersichtlich ist umgibt das Verbindungselement 5 den Kanal 7 über einen Winkel von mehr als 180°, so daß zum Lösen des Verbindungselementes 5 dieses aufgespreizt werden muß.

Das Verbindungselement 5 weist Endbereiche 20 auf, die in sich in Längsrichtung des ersten Halteteils 3 und des zweiten Halteteils 4 erstreckende Rille 12 hineinragen. Die Endbereiche 20 weisen einander zugewandte Vorsprünge 21 auf Diese Vorsprünge sind im wesentlichen kreisförmig ausgebildet, wie dies die Figur 11 zeigt. Das Element 5 ist vorzugsweise aus einem federelastischen Blech gebildet. Die Vorsprünge 21 sind durch Umbiegen der Endbereiche 20 gebildet.

Figur 13 zeigt eine Leitung 6 im Kanal 7,. wobei die Leitung 6 einen Durchmesser aufweist, der größer ist als ein Kanal 7, wenn die Halteteile 3, 4 mit ihren Stirnflächen 22 aneinander stoßen, wie dies aus der Figur 14 ersichtlich ist.

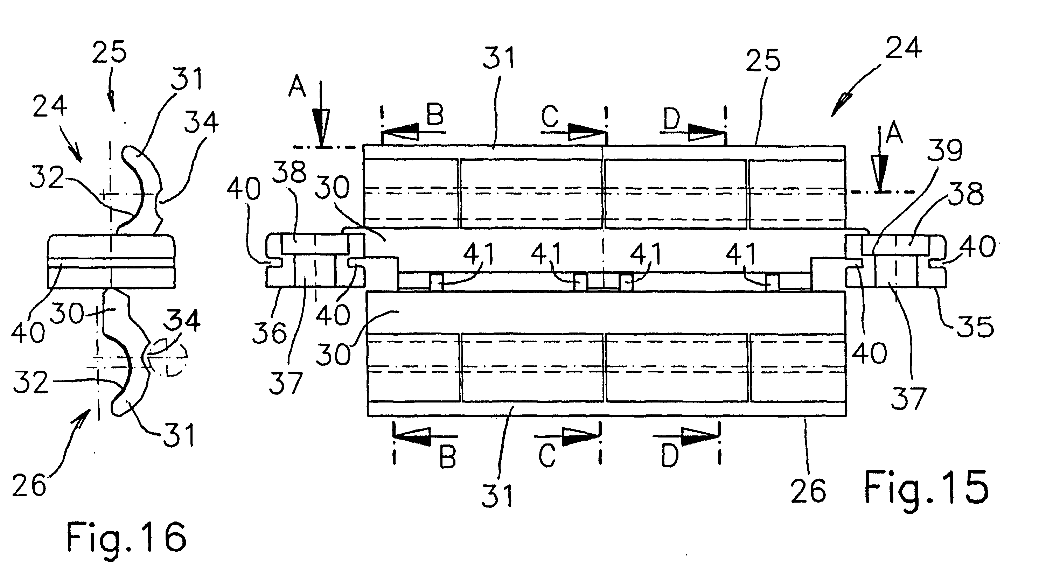

In den Figuren 15 bis 21 ist ein zweites Ausführungsbeispiel einer Energieführungskette mit einer Halteeinrichtung 23 für wenigstens ein Kabel oder eine Leitung dargestellt. Die Halteeinrichtung 23 weist einen Haltekörper 24 auf Der Haltekörper 24 ist durch ein erstes Halteteil 25 und ein zweites Halteteil 26 gebildet.

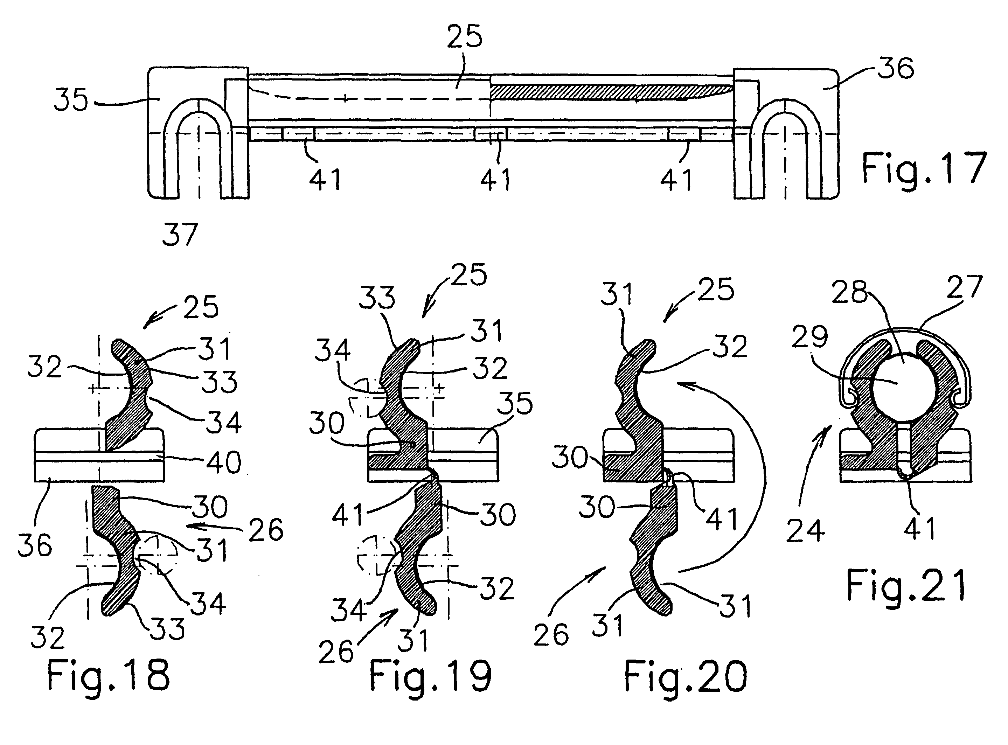

Das erste Halteteil 25 umfaßt einen Grundkörper 30, der eine Halteschale 31 aufweist. Die Halteschale 31 weist eine gekrümmt ausgebildete Wand 32 auf, die einen Kanal 29, wie er in der Figur 21 dargestellt ist, teilweise begrenzt. An der Außenwand 33 der Halteschale 31 ist eine Rille 34 ausgebildet. Die Rille 34 erstreckt sich in Längsrichtung des Haltekörpers 24.

An jedem Endbereich des ersten Halteteils 25 ist jeweils ein Anschlußteil 35, 36 ausgebildet. Das Anschlußteil 35, 36 weist eine U-förmige Ausnehmung 37 auf Die Ausnehmung 37 weist eine Kopfaufnahme 38 mit einer Auflagefläche 39 auf. In die Kopfaufnahme 38 ist beispielsweise der Kopf einer Schraube einbringbar. Statt einer Schraube kann auch eine Mutter in die Kopfaufnahme 38 eingebracht werden. Der Haltekörper 24 kann über die Anschlußteile 35, 36 mit einer Auflagefläche mittels Schrauben oder Gewindestiften mit Muttern festgelegt werden. Alternativ hat jedes Anschlußteil 35, 36 Schlitze 40, in die die Schenkel eines Profils einbringbar sind, wie dies bei der ersten Ausführungsform der Halteeinrichtung nach Figur 1 dargestellt ist.

Das zweite Halteteil 26 ist durch einen Grundkörper 30 gebildet. Der Grundkörper 30 ist mit einer Halteschale 31 verbunden. Die Halteschale 31 weist eine gekrümmt ausgebildete Wand 32 auf Die Wand 32 des zweiten Halteteils 26 begrenzt teilweise einen Kanal 29. Die Längserstreckung des zweiten Halteteils 26 entspricht im wesentlichen dem Abstand der Anschlußteile 35, 36 zueinander. In dem in der Figur 15 dargestellten Ausführungsbeispiel sind die Grundkörper 30 des ersten Halteteils 25 und des zweiten Halteteils 26 über Filmscharniere 41 gelenkig miteinander verbunden. Der Haltekörper 24 besteht aus einem Kunststoff. Dieser ist einstückig ausgebildet.

Die gelenkige Verbindung der Halteteile 25, 26 ist so gewählt, daß die Wand 32 des ersten Halteteils 25 und des zweiten Halteteils 26 einen Kanal 29 begrenzen. Wie aus der Figur 20 ersichtlich ist, kann das zweite Halteteil entsprechend dem Pfeil verschwenkt werden, so daß ein Kanal 29 zur Aufnahme einer Leitung 28, wie in der Figur 21 dargestellt ist, gebildet wird.

Die Halteteile 25, 26 sind miteinander durch Verbindungselement 27 miteinander verbunden. Die Ausgestaltung des Verbindungselementes 27 entspricht im wesentlichen der Ausgestaltung des in der Figur 11 dargestellten Verbindungselementes 5. Auch hinsichtlich der Ausgestaltung der Nuten 34 kann auf die Beschreibung zum ersten Ausführungsbeispiel einer Halteeinrichtung verwiesen werden.

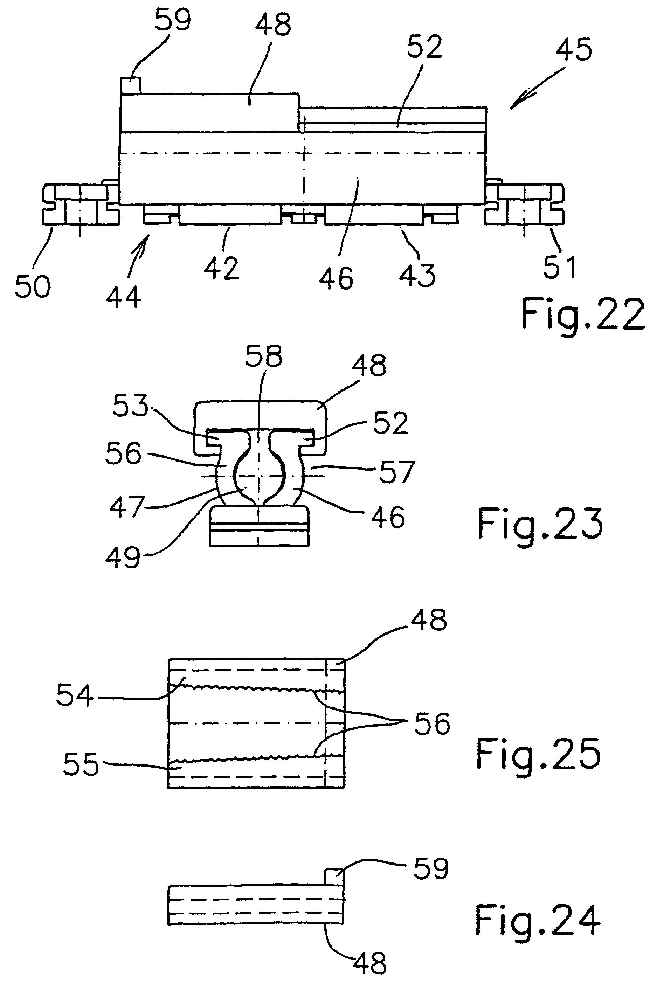

In den Figuren 22 bis 24 ist ein drittes Ausführungsbeispiel einer Energieführungskette mit einer Halteeinrichtung 44 dargestellt. Die Halteeinrichtung 44 umfaßt einen Haltekörper 45, der durch ein erstes Halteteil 46 und ein zweites Halteteil 47 gebildet ist. Die Halteteile 46, 47 sind durch Scharniere 42, 43 gelenkig miteinander verbunden. Die Halteteile 46, 47 begrenzen einen Kanal 49, der zur Aufnahme einer nicht dargestellten Leitung geeignet ist. Zur Festlegung des Haltekörpers 45 weist dieser Anschlußteile 50, 51 auf, die in ihrer Ausgestaltung den Anschlußteilen 13, 14 entsprechen.

Der prinzipielle Aufbau des ersten Halteteils 46 und des zweiten Halteteils 47 entspricht dem Aufbau des ersten Halteteils 25 bzw. des zweiten Halteteils 26 des zweiten Ausführungsbeispiels einer Haheeinrichtung 23.

Die Halteteile 46, 47 sind über ein Verbindungselement 48 miteinander verbunden. Das Verbindungselement 48 ist im Querschnitt im wesentlichen C-förmig ausgebildet. Es weist Vorsprünge 54, 55 auf, die zur Anlage an eine Außenwand 56, 57 des ersten Halteteils 46 bzw. des zweiten Halteteils 47 gelangen. Wie aus der Figur 25 ersichtlich ist, verjüngt sich der lichte Abstand der Stirnflächen 56, der Vorsprünge 54, 55. Die Stirnflächen 56 sind rauh ausgebildet, so daß ein relativ hoher Reibungskoeffizient zwischen der Stirnfläche 56 und der Wand 56 bzw 57 des ersten Halteteils 46 bzw. des zweiten Halteteils 47 entsteht. Das erste Halteteil 46 weist eine radial auswärts gerichtete Rippe 52 auf. In entsprechender Weise ist das zweite Halteteil 47 ausgebildet. Auch dieses weist eine radial auswärts gerichtete Rippe 23 auf. Zur Festlegung einer Leitung in dem Kanal 49 wird das Verbindungselement 48 so auf den Haltekörper 45 geschoben, daß die Rippen 52, 53 in das C-förmige Profil 58 des Verbindungselementes 48 hineinragen. Durch den sich verringernden Abstand zwischen den Stirnflächen 56 der Vorsprünge 54, 55 wird auf das erste Halteteil 46 und auf das zweite Halteteil 47 eine einwärts gerichtete Kraft ausgeübt, so daß eine im Kanal 49 angeordnete Leitung durch die Halteteile 46, 47 festgeklemmt wird.

Zur Vereinfachung der Aufbringung des Verbindungselementes 48 auf den Haltekörper 45 weist dieser eine Montagenase 59 auf.

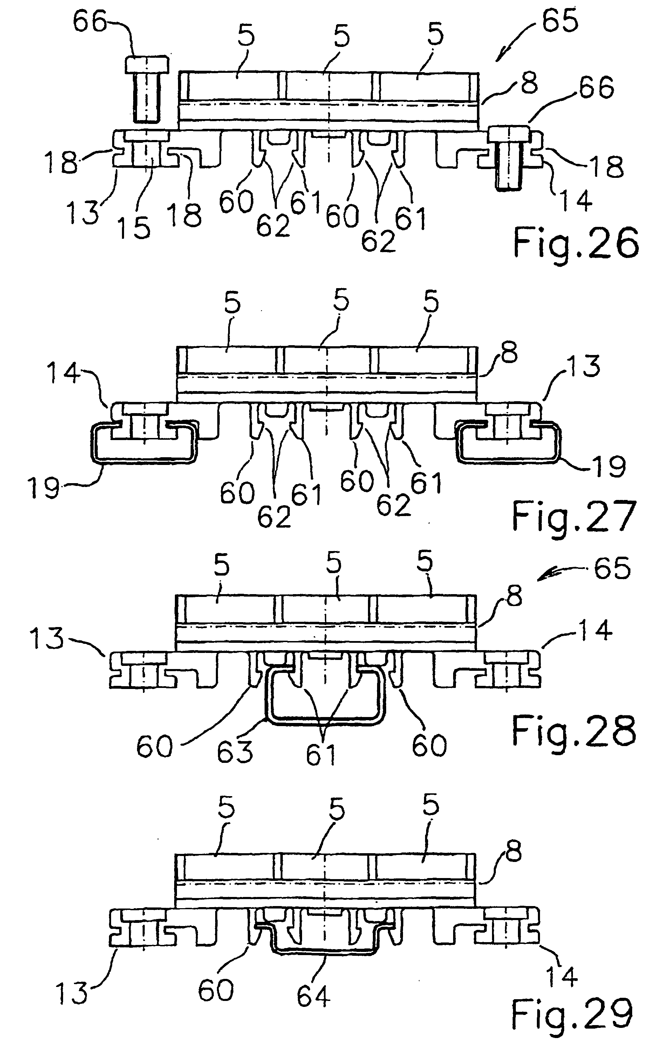

In den Fig. 26 bis 30 ist ein weiteres Ausführungsbeispiel einer Energieführungskette mit einer Halteeinrichtung 65 dargestellt. Der prinzipielle Aufbau der Halteeinrichtung 65 entspricht dem Aufbau der Halteeinrichtung 1, wie sie in den Fig. 1 bis 7 dargestellt ist. Im Unterschied zu dem vorangegangenen Ausführungsbeispiel einer Halteeinrichtung weist die in der Fig. 26 dargestellte Halteeinrichtung Laschen 60, 61 auf, die sich im wesentlichen quer zur Längsrichtung der Halteeinrichtung von dieser weg erstrecken. Die Laschen 60, 61 sind vorzugsweise federelastisch ausgebildet. Sie sind gegenüberliegend angeordnet. Jeweils zwei Laschen 60, 61 bilden ein Anschlußteil, durch welches die Halteeinrichtung an einer Auf- oder Anlagefläche befestigt werden kann.

An den einander zugewandten Flächen der Laschen 60, 61 sind diese hakenförmig ausgebildet.

Die in der Fig. 26 dargestellte Halteeinrichtung 65 kann auf mehrere Arten mit einer An- oder Auflagefläche verbunden werden. Fig. 26 zeigt, daß das Halteteil 65 durch Schrauben 66, die sich durch die Anschlußteile 13, 14 hindurch erstrecken, festgelegt werden kann. Die Anschlußteile 13, 14 weisen Ausnehmungen 15 in Form von Durchgangsbohrungen auf.

Eine weitere Möglichkeit, das Halteteil 65 festzulegen, besteht darin, die Anschlußteile an C-förmigen Profilen 19 festzulegen. Hierzu weisen die Anschlußteile 13, 14 entsprechende Schlitze 18 auf, in die die freien Schenkel der Profile 19 wenigstens teilweise hineinragen.

Fig. 28 zeigt, daß die Halteeinrichtung 65 an einem Profil 63 festgelegt ist. In das Profil greifen Laschen 61 ein, die mit ihren Haken 62 hinter die freien Schenkel des Profils 63 greifen, so daß die Halteeinrichtung 65 an dem Profil 63 festgelegt ist.

Fig. 29 zeigt eine weitere Variante der Befestigung der Halteeinrichtung 65 an einem Profil 64. Das Profil 64 ist im Querschnitt im wesentlichen U-förmig ausgebildet. Es weist im wesentlichen parallel zur Basis des U-förmigen Profils verlaufende Längsränder auf, die mit den außen liegenden Laschen 60 zusammenwirken. Die Haken 62 der Laschen 60 greifen unter die Längsränder des Profils.

Die vorstehend beschriebenen Energieführungskette mit Halteeinrichtungen sind auch dazu geeignet, einen elektrischen Schirmabschluß zu bilden. Hierzu können die Halteteile der Halteeinrichtung aus einem Metall bestehen, der elektrisch leitend ist. Die Halteeinrichtung kann über geeignete Mittel mit einem Massepotential verbunden sein. Besteht der Haltekörper aus einem Kunststoff, so wird vorgeschlagen, daß die Wand der Halteteile, die zur Anlage an eine Abschirmung eines Kabels gelangt, metallisiert ist. Hierzu kann die Wand mit einem Metall beschichtet sein.

### Bezugszeichenliste

- 1: Zugentlastungseinrichtung
- 2: Haltekörper
- 3: erstes Halteteil
- 4: zweites Halteteil
- 5: Verbindungselement
- 6: Leitung
- 7: Kanal
- 8: Grundkörper
- 9: Halteschale
- 10: Wandung
- 11: Außenwand
- 12: Rille
- 13, 14: Anschlußteil
- 15: Ausnehmung
- 16: Kopfaufnahme
- 17: Auflagefläche
- 18: Schlitz
- 19: Profil
- 20: Endbereich
- 21: Vorsprung
- 22: Stirnfläche
- 23: Zugentlastungseinrichtung
- 24: Haltekörper
- 25: erstes Halteteil
- 26: zweites Halteteil
- 27: Verbindungselement
- 28: Leitung
- 29: Kanal
- 30: Grundkörper
- 31: Halteschale
- 32: Wand
- 33: Außenwand
- 34: Rille
- 35,36: Anschlußteil
- 37: Ausnehmung
- 38: Kopfaufnahme
- 39: Auflagefläche
- 40: Schlitz
- 41: Filmscharnier
- 42,43: Scharnier
- 44: Zugentlastungseinrichtung
- 45: Haltekörper
- 46: erstes Halteteil
- 47: zweites Halteteil
- 48: Verbindungselement
- 49: Kanal
- 50, 51: Anschlußteil
- 52,53: Rippe
- 54,55: Vorsprung
- 56,57: Wand
- 58: Profil
- 59: Montagenase
- 60: Lasche
- 61: Lasche
- 62: Haken
- 63: Profil
- 64: Profil
- 65: Halteeinrichtung

## Patentansprüche

1. Energieführungskette mit einer Halteeinrichtung für wenigstens ein Kabel oder eine Leitung mit einem Haltekörper (2, 24, 45), der ein erstes und ein zweites Halteteil (3, 4, 25, 26, 46, 47) aufweist, wobei die Halteteile (3, 4, 25, 26, 46, 47) einen Kanal (7, 29, 49) begrenzen, und mit wenigstens einem die Halteteile (3, 4, 25, 26, 46, 47) lösbar verbindenden Verbindungselement (5, 27, 48), das das erste und das zweite Halteteil (3, 4, 25, 26, 46, 47) teilweise umgreift, **dadurch gekennzeichnet, daß** jedes Verbindungselement (5, 27, 48) auf das erste und auf das zweite Halteteil (3, 4, 25, 26, 46, 47) eine Kraft ausübt, durch die eine im Kanal (7, 29, 49) verlegte Leitung (6, 28) zwischen den Halteteilen (3, 4, 25, 26, 46, 47) geklemmt und kraftschlüssig gehalten wird.

2. Energieführungskette nach Anspruch 1, **dadurch gekennzeichnet, daß** das Verbindungselement (5, 27), im wesentlichen C-förmig ausgebildet ist.

3. Energieführungskette nach Anspruch 1 oder 2, **dadurch gekennzeichnet, daß** Verbindungselement (5, 27), wenigstens teilweise federnd ausgebildet ist.

4. Energieführungskette nach Anspruch 3, **dadurch gekennzeichnet, daß** das Verbindungselement (5, 27) eine Feder bildet.

5. Energieführungskette nach Anspruch 2, 3 oder 4, **dadurch gekennzeichnet, daß** das Verbindungselement (5, 27) den Kanal (7, 29) über einen Winkel von mehr als 180° umgibt.

6. Energieführungskette nach einem der Ansprüche 1 bis 5, **dadurch gekennzeichnet, daß** das Verbindungselement (5, 27) Endbereiche (20) aufweist, die in Längsrichtung des Halteteils (3, 4, 25, 26) sich erstreckende Rillen (12, 34) hineinragen.

7. Energieführungskette nach Anspruch 6, **dadurch gekennzeichnet, daß** die Endbereiche (20) aneinander zugewandte Vorsprünge (21) aufweisen und die Rillen (12, 34) einen an den Querschnitt der Vorsprünge (31) angepaßte Innenkontur aufweisen.

8. Energieführungskette nach einem der Ansprüche 1 bis 7, **dadurch gekennzeichnet, daß** das erste Halteteil (3, 25, 46) an seinen freien Enden jeweils ein Anschlußteil (13, 14, 35, 36, 50, 51) aufweist.

9. Energieführungskette nach einem der Ansprüche 1 bis 8, **dadurch gekennzeichnet, daß** wenigstens ein Halteteil wenigstens ein Anschlußteil aufweist, welches durch wenigstens zwei im wesentlichen quer zur Längserstreckung des Halteteils verlaufende, beabstandete Laschen (60, 61) gebildet ist, die an ihren freien Enden hakenförmig ausgebildet sind.

10. Energieführungskette nach Anspruch 8 oder 9, **dadurch gekennzeichnet, daß** das zweite Halteteil (4, 26, 47) zwischen den Anschlußteilen (13, 14, 35, 36, 50, 51) angeordnet ist, wobei die Längserstreckung des zweiten Halteteils (4, 26, 47) im wesentlichen einem Abstand der Anschlußteile (13, 14, 35, 36, 50, 51) in Längsrichtung des zweiten Halteteils (4, 26, 47) entspricht.

11. Energieführungskette nach einem der Ansprüche 1 bis 10, **dadurch gekennzeichnet, daß** die Halteteile (25, 26) gelenkig miteinander verbunden sind.

12. Energieführungskette nach einem der Ansprüche 1 bis 11, daß wenigstens die Wandung (10, 32) des Kanals (7, 29) elektrisch leitend ausgebildet ist und die Wandung (10, 32) elektrisch mit einem Massepotential verbindbar ist.

13. Energieführungskette nach Anspruch 12, **dadurch gekennzeichnet, daß** die Halteteile (3, 4, 25, 26, 46, 47) aus einem Kunststoff gebildet sind und die Wandung (10, 32) wenigstens teilweise mit einer elektrisch leitenden Metallschicht versehen ist.

14. Energieführungskette nach Anspruch 12, **dadurch gekennzeichnet, daß** die Halteteile (3, 4, 25, 26, 46, 47) aus einem Metall bestehen.

## Claims

1. Energy guide chain with a holding device for at least one cable or line having a holding body (2, 24, 45), which has a first and a second holding portion (3, 4, 25, 26, 46, 47), wherein the holding portions (3, 4, 25, 26, 46, 47) define a passage (7, 29, 49), and with at least one connecting element (5, 27, 48) which releasably connects the holding portions (3, 4, 25, 26, 46, 47) and which partially embraces the first and second holding portions (3, 4, 25, 26, 46, 47), **characterised in that** each connecting element (5, 27, 48) applies to the first and the second holding portions (3, 4, 25, 26, 46, 47) a force by which a line (6, 28) laid in the passage (7, 29, 49) is clamped and held in force-locking relationship between the holding portions (3, 4, 25, 46, 47).

2. Energy guide chain according to claim 1, **characterised in that** the connecting element (5, 27) is of a substantially C-shaped configuration.

3. Energy guide chain according to claim 1 or claim 2, **characterised in that** the connecting element (5, 27) is of an at least partially resilient nature.

4. Energy guide chain according to claim 3, **characterised in that** the connecting element (5, 27) forms a spring.

5. Energy guide chain according to claim 2, 3 or 4, **characterised in that** the connecting element (5, 27) extends around the passage (7, 29) over an angle of more than 180°.

6. Energy guide chain according to one of claims 1 to 5, **characterised in that** the connecting element (5, 27) has end regions (20) which project into grooves (12, 34) extending in the longitudinal direction of the holding portions (3, 4, 25, 26).

7. Energy guide chain according to claim 6, **characterised in that** the end regions (20) have mutually facing projections (21) and the grooves (12, 34) are of an internal contour which is adapted to the cross-section of the projections (21).

8. Energy guide chain according to one of claims 1 to 7, **characterised in that** the first holding portion (3, 25, 46) has a respective connecting part (13, 14, 35, 36, 50, 51) at each of its free ends.

9. Energy guide chain according to one of claims 1 to 8, **characterised in that** at least one holding portion has at least one connecting part which is formed by at least two spaced tongues (60, 61) which extend substantially transversely with respect to the longitudinal extent of the holding portion and which are of a hooked configuration at their free ends.

10. Energy guide chain according to claim 8 or claim 9, **characterised in that** the second holding portion (4, 26, 47) is arranged between the connecting parts (13, 14, 35, 36, 50, 51), wherein the longitudinal extent of the second holding portion (4, 26, 47) substantially corresponds to a spacing of the connecting parts (13, 14, 35, 36, 50, 51) in the longitudinal direction of the second holding portion (4, 26, 27).

11. Energy guide chain according to one of claims 1 to 10, **characterised in that** the holding portions (25, 26) are pivotably connected together.

12. Energy guide chain according to one of claims 1 to 11, **characterised in that** at least the wall (10, 32) of the passage (7, 29) is electrically conducting and the wall (10, 32) can be electrically connected to an earth potential.

13. Energy guide chain according to claim 12, **characterised in that** the holding portions (3, 4, 25, 26, 46, 47) are formed from a plastics material and the wall (10, 32) is at least partially provided with an electrically conducting metal layer.

14. Energy guide chain according to claim 12, **characterised in that** the holding portions (3, 4, 25, 26, 46, 47) comprise a metal.

## Revendications

1. Chaîne de transport d'énergie avec un dispositif de retenue pour au moins un câble ou une ligne avec un corps de retenue (2, 24, 45) qui a une première et une deuxième section de retenue (3, 4, 25, 26, 46, 47), dans quel cas les sections de retenue (3, 4, 25, 26, 46, 47) définissent un canal (7, 29, 49), et avec au moins un élément de liaison (5, 27, 48) qui relie de manière détachable les sections de retenue (3, 4, 25, 26, 46, 47) et qui embrasse partiellement la première et la deuxième section de retenue (3, 4, 25, 26, 46, 47), **caractérisée en ce que** chaque élément de liaison (5, 27, 48) exerce une force sur la première et sur la deuxième section de retenue (3, 4, 25, 26, 46, 47) au moyen de laquelle une ligne (6, 28) disposée dans le canal (7, 29, 49) est serrée et est retenue par coopération de forces entre les sections de retenue (3, 4, 25, 26, 46, 47).

2. Chaîne de transport d'énergie selon la revendication 1, **caractérisée en ce que** l'élément de liaison (5, 27) est réalisé sensiblement en forme de C.

3. Chaîne de transport d'énergie selon la revendication 1 ou 2, **caractérisée en ce que** l'élément de liaison (5, 27) est réalisé au moins partiellement de manière résiliente.

4. Chaîne de transport d'énergie selon la revendication 3, **caractérisée en ce que** l'élément de liaison (5, 27) forme un ressort.

5. Chaîne de transport d'énergie selon la revendication 2, 3 ou 4, **caractérisée en ce que** l'élément de liaison (5, 27) entoure le canal (7, 29) sur un angle de plus de 180°.

6. Chaîne de transport d'énergie selon l'une des revendications 1 à 5, **caractérisée en ce que** l'élément de liaison (5, 27) présente des zones d'extrémité (20) qui pénètrent dans des rainures (12, 34) s'étendant en direction longitudinale de la section de retenue (3, 4, 25, 26).

7. Chaîne de transport d'énergie selon la revendication 6, **caractérisée en ce que** les zones d'extrémité (20) ont des saillies (21) tournées les unes vers les autres et les rainures (12, 34) ont un contour intérieur adapté à la section transversale des saillies (21).

8. Chaîne de transport d'énergie selon l'une des revendications 1 à 7, **caractérisée en ce que** la première section de retenue (3, 25, 46) a respectivement un élément de raccord (13, 14, 35, 36, 50, 51) sur ses extrémités libres.

9. Chaîne de transport d'énergie selon l'une des revendications 1 à 8, **caractérisée en ce qu'**au moins une section de retenue a au moins un élément de raccord qui est formé par au moins deux éclisses (60, 61) à distance l'une de l'autre s'étendant sensiblement de manière transversale par rapport à l'étendue longitudinale de la section de retenue, lesquelles éclisses (60, 61) sont réalisées en forme de crochets sur leurs extrémités libres.

10. Chaîne de transport d'énergie selon la revendication 8 ou 9, **caractérisée en ce que** la deuxième section de retenue (4, 26, 47) est agencée entre les éléments de raccord (13, 14, 35, 36, 50, 51), dans quel cas l'étendue longitudinale de la deuxième section de retenue (4, 26, 47) correspond sensiblement à un écart des éléments de raccord (13, 14, 35, 36, 50, 51) en direction longitudinale de la deuxième section de retenue (4, 26, 47).

11. Chaîne de transport d'énergie selon l'une des revendications 1 à 10, **caractérisée en ce que** les sections de retenue (25, 26) sont reliées les unes aux autres de manière articulée.

12. Chaîne de transport d'énergie selon l'une des revendications 1 à 11, **caractérisée en ce qu'**au moins la paroi (10, 32) du canal (7, 29) est réalisée de manière électroconductrice et la paroi (10, 32) peut être reliée électriquement à un potentiel terrestre.

13. Chaîne de transport d'énergie selon la revendication 12, **caractérisée en ce que** les sections de retenue (3, 4, 25, 26, 46, 47) sont formées d'une matière plastique et la paroi (10, 32) est pourvue au moins partiellement d'une couche de métal à conductivité électrique.

14. Chaîne de transport d'énergie selon la revendication 12, **caractérisée en ce que** les sections de retenue (3, 4, 25, 26, 46, 47) comportent un métal.
